# EUROPÄISCHE PATENTANMELDUNG

(11) **EP 4 821 831 A1**
(43) Veröffentlichungstag der Anmeldung: **14.10.2026**
(21) Anmeldenummer: 26168934.3
(22) Anmeldetag: 30.03.2026
(51) Int. Cl.: B65B 21/02, B25J 9/00, B25J 15/00, B65B 43/46, B65B 43/52, B65B 59/00, B65B 65/00, B65G 15/22, B65G 47/29, B65G 47/90

(54) **ARBEITSWERKZEUG UND VERFAHREN ZUM MANIPULIEREN VON GETRÄNKEBEHÄLTERKISTEN**

(30) Priorität: 10.04.2025 DE 102025114273
(71) Anmelder: Krones Aktiengesellschaft, 93073 Neutraubling (DE)
(72) Erfinder: DIETERSBERGER, Martin, 93073 Neutraubling (DE); FELLER, Simon, 93073 Neutraubling (DE); GABLER, Markus, 93073 Neutraubling (DE); STADLER, Thomas, 93073 Neutraubling (DE); TRUSSINA-KAIDEL, Rolf Immanuel, 93073 Neutraubling (DE)
(74) Vertreter: Benninger, Johannes

(57) **Zusammenfassung**

Es ist ein Arbeitswerkzeug (52) zum Manipulieren von Getränkebehälterkisten (12) offenbart. Das Arbeitswerkzeug (52) umfasst mehrere Halteinstrumente, welche zum Festsetzen mehrerer Getränkebehälterkisten (12) am Arbeitswerkzeug (52) betätigbar sind, um durch eine Transferbewegung des Arbeitswerkzeuges (52) die hieran festgesetzten Getränkebehälterkisten (12) an einen Zielort zu verbringen.

Weiter umfasst das Arbeitswerkzeug (52) mehrere Anschläge (56), die zum Ausrichten mehrerer Getränkebehälterkisten (12) bei einer aufgehobenen Betätigung der mehreren Halteinstrumente ausgebildet sind.

## Beschreibung

Die vorliegende Erfindung betrifft ein Arbeitswerkzeug zum Manipulieren von Getränkebehälterkisten und ein Verfahren zum Manipulieren von Getränkebehälterkisten.

Bei einer automatisierten Verarbeitung von Getränkebehälterkisten werden die Getränkebehälterkisten regelmäßig Stoß an Stoß transportiert und hierauf in eine relative Ausrichtung zueinander gebracht, welche auf die nachfolgende Verarbeitung der Getränkebehälterkisten abgestimmt ist. Aus dem Stand der Technik sind beispielsweise Auspacker bekannt, welche aus Getränkebehälterkisten Getränkebehälter entnehmen, nachdem Getränkebehälterkisten in eine vorgegebene relative Beabstandung zueinander gebracht worden sind. Auch sind Einpackmaschinen bekannt, welche Getränkebehälter in Getränkebehälterkisten einsetzen, nachdem die Getränkebehälterkisten in vorgegebene relative Beabstandungen zueinander gebracht worden sind.

Eine solche Maschine ist beispielsweise aus der WO 2023/117563 A1 bereits bekannt. In der WO-Schrift wird eine Verpackungsvorrichtung offenbart, welche zum Verpacken oder Umverpacken von Artikelgruppen ausgebildet ist. Die Vorrichtung umfasst einen Taktbildungsbereich und einen Bestückungsbereich. Im Taktbildungsbereich werden Getränkebehälterkisten über einen Manipulator entgegengenommen und in eine getaktete Anordnung gebracht. Hierzu werden die Getränkebehälterkisten über Haltevorrichtungen entgegengenommen und die Haltevorrichtungen in eine vorgegebene Position gebracht. Im Bestückungsbereich werden in die Getränkebehälterkisten Getränkebehälter eingesetzt.

Durch einen mehrfachen Gebrauch oder bereits während der Fertigung besitzen Getränkebehälterkisten Maßabweichungen, die sich nach Möglichkeiten innerhalb vorgegebener Toleranzbereiche befinden sollen. Wenn Getränkebehälterkisten während einer Kontaktförderung bzw. während einer Förderung Stoß an Stoß über ein Arbeitswerkzeug entgegengenommen und ausgerichtet werden, kann es sein, dass sich die Getränkebehälterkisten nicht an einer erwarteten Soll-Position befinden, da sich Maßabweichungen bei einer Beförderung von Getränkebehälterkisten entlang einer Transportstrecke aufsummieren. Wenn die Getränkebehälterkisten nach einer solchen Entgegennahme dann ausgerichtet werden, ist es regelmäßig der Fall, dass sich die Getränkebehälterkisten nicht an einer erwarteten Soll-Position befinden, wodurch Probleme bei der nachfolgenden Verarbeitung der Getränkebehälterkisten entstehen können.

Eine Aufgabe der Erfindung kann somit darin gesehen werden, eine einfache Möglichkeit bereitzustellen, mit der Getränkebehälterkisten auch bei größeren Maßabweichungen exakt zueinander ausgerichtet werden können.

Die obigen Aufgaben werden durch die Gegenstände gelöst, welche die Merkmale in den unabhängigen Ansprüchen umfassen. Vorteilhafte Ausführungsformen werden durch die abhängigen Ansprüche beschrieben.

Die Erfindung betrifft ein Arbeitswerkzeug zum Manipulieren von Getränkebehälterkisten. Das Arbeitswerkzeug umfasst mehrere Halteinstrumente, welche zum Festsetzen mehrerer Getränkebehälterkisten am Arbeitswerkzeug betätigbar sind, um durch eine Transferbewegung des Arbeitswerkzeuges die hieran festgesetzten Getränkebehälterkisten an einen Zielort zu verbringen. Weiter umfasst das Arbeitswerkzeug mehrere Anschläge, die zum Ausrichten mehrerer Getränkebehälterkisten bei einer aufgehobenen Betätigung der mehreren Halteinstrumente ausgebildet sind.

Da die Getränkebehälterkisten nicht über die Halteinstrumente ausgerichtet werden, wirken sich aufgestaute Toleranzabweichungen nicht auf das Ausrichten der Getränkebehälterkisten aus, so dass mittels des Arbeitswerkzeuges Getränkebehälterkisten exakt ausgerichtet werden können. Ein solches Arbeitswerkzeug ist zudem sehr einfach aufgebaut.

Bewährt haben sich Ausführungsformen, bei denen die mehreren Anschläge durch mehrere Zentrierfinger ausgebildet sind. Das Arbeitswerkzeug kann eine Brücke umfassen, an welcher die Zentrierfinger befestigt sind und welche Brücke die mehreren Zentrierfinger trägt. Alternativ oder ergänzend hierzu kann es sein, dass ein jeweiliger Zentrierfinger hängend an einer jeweiligen Brücke angeordnet ist. Es kann sein, dass die mehreren Anschläge unmittelbar oder direkt an der Brücke befestigt sind. Auch sind Ausführungsformen vorstellbar, bei denen die mehreren Zentrierfinger über eine mechanische Koppelung derart an der Brücke befestigt sind, dass sie einen definierten Abstand zur Brücke besitzen

Es kann sein, dass die mehreren Anschläge durch mindestens drei Zentrierfinger ausgebildet sind, wobei das Arbeitswerkzeug eine Brücke umfasst, an welcher die mindestens drei Zentrierfinger befestigt sind. Hierbei hat es sich bewährt, wenn die relativen Abstände zwischen jeweiligen Zentrierfingern, die entlang einer Längsrichtung der Brücke unmittelbar benachbart sind, identisch ausgebildet sind.

Es kann sein, dass die Anzahl an Halteinstrumenten auf die Anzahl an Getränkebehälterkisten abgestimmt ist, welche gemeinsam am Arbeitswerkzeug festsetzbar sind. Insbesondere kann es sein, dass für jede dieser gemeinsam am Arbeitswerkzeug festzusetzenden Getränkebehälterkisten zwei Halteinstrumente vorgesehen sind, wobei die Halteinstrumente zum paarweisen Festsetzen einer jeweiligen Getränkebehälterkiste am Arbeitswerkzeug zusammenwirken.

Alternativ oder ergänzend hierzu kann es sein, dass die Anzahl an Anschlägen auf die Anzahl an Getränkebehälterkisten abgestimmt ist, welche Getränkebehälterkisten gemeinsam am Arbeitswerkzeug festsetzbar sind. Insbesondere kann es sein, dass für jede dieser gemeinsam am Arbeitswerkzeug festzusetzenden Getränkebehälterkisten mindestens ein eigener Anschlag und insbesondere mindestens zwei eigene Anschläge oder ggf. genau zwei eigene Anschläge vorgesehen sind, welche zum Ausrichten der Getränkebehälterkisten bei einer aufgehobenen Betätigung der mehreren Halteinstrumente ausgebildet sind.

Es kann sein, dass die mehreren Anschläge zum Ausrichten der mehreren Getränkebehälterkisten abstandsveränderlich an einer Brücke des Arbeitswerkzeuges angeordnet sind. Bei solchen Ausführungsformen kann es sein, dass das Arbeitswerkzeug mindestens einen Aktuator umfasst, über welchen die mehreren Anschläge zum Ausrichten der mehreren Getränkebehälterkisten abstandsveränderlich bewegbar sind. Alternativ oder ergänzend hierzu kann es sein, dass das Arbeitswerkzeug eine Linearführung umfasst, die entlang einer Längsrichtung der Brücke verläuft und an welcher die mehreren Anschläge zur abstandsveränderlichen Bewegung angeordnet sind.

Weiter hat es sich bewährt, wenn das Arbeitswerkzeug keinen Einführrahmen umfasst bzw. wenn das Arbeitswerkzeug ohne einen Einführrahmen ausgebildet ist, der in der Praxis regelmäßig einen rechteckförmigen Querschnitt ausbilden kann und/oder mehrere Führungselemente aufweisen kann, welche mit Getränkebehältern bei einem Einsetzen und/oder bei einer Entnahme aus einer Getränkebehälterkiste in Oberflächenkontakt stehen.

Auch kann es sein, dass die mehreren Anschläge zum Ausrichten der mehreren Getränkebehälterkisten abstandsunveränderlich bzw. ortsfest an einer Brücke des Arbeitswerkzeuges angeordnet sind. Bei solchen Ausführungsformen kann das gesamte Arbeitswerkzeug bewegt werden bzw. einen Hub entlang einer vorgegebenen Bewegungsrichtung durchführen und hierbei die mehreren Getränkebehälterkisten ausrichten. Solche Ausführungsformen zeichnen sich durch einen einfachen Aufbau des Arbeitswerkzeuges und durch die Möglichkeit einer unkomplizierten Ausrichtung der Getränkebehälterkisten aus.

Alternativ oder ergänzend hierzu kann es sein, dass die mehreren Halteinstrumente durch mehrere Klemmbacken ausgebildet sind, die zum Festsetzen der Getränkebehälterkisten am Arbeitswerkzeug paarweise zusammenwirken. Es kann sein, dass die Klemmbacken bei einer Betätigung eine Zustellbewegung ausführen, bei der ein jeweiliges Paar an Klemmbacken ihren relativen Abstand zueinander verkleinert und eine jeweilige Getränkebehälterkiste erfasst. Weiter kann es sein, dass die Klemmbacken eines jeweiligen Paares ihren relativen Abstand zueinander vergrößern, wenn die Betätigung aufgehoben wird, wodurch eine jeweilige Getränkebehälterkiste freigegeben wird.

Die Erfindung betrifft zudem einen Industrieroboter zur Handhabung von Getränkebehälterkisten. Der Industrieroboter umfasst ein Arbeitswerkzeug gemäß einer der vorhergehend beschriebenen Ausführungsformen. In bevorzugten Ausführungsformen kann es sein, dass es sich bei dem Industrieroboter um einen Portalroboter handelt. Denkbar ist jedoch beispielsweise auch, dass der Industrieroboter als Deltakinematik-Roboter oder als Gelenkarmroboter ausgebildet ist.

Auch betrifft die Erfindung einen Auspacker für Getränkebehälter. Solche Auspacker werden verwendet, um Getränkebehälter aus Getränkebehälterkisten zu entnehmen und einer nachfolgenden Bearbeitung zuzuführen. So ist es regelmäßig der Fall, dass Getränkebehälter aus Getränkebehälterkisten entnommen werden, woraufhin überprüft wird, ob die entnommenen Getränkebehälter einen Fehler oder eine Beschädigung aufweisen. Solche entnommenen Getränkebehälter, welche einen Fehler aufweisen, können entsorgt werden. Wenn die entnommenen Getränkebehälter beschädigungsfrei und fehlerfrei sind, können diese gereinigt und erneut befüllt werden. Unter einem Auspacker kann demnach eine Maschine verstanden werden, welche Getränkebehälter aus Getränkebehälterkisten entnimmt, um diese nach einer entsprechenden Aufbereitung erneut zu befüllen und erneut in Getränkebehälterkisten einzubringen, wenn sie keinen Fehler oder keine Beschädigung aufweisen.

Bei den Getränkebehältern kann es sich um Getränkeflaschen und insbesondere um Glasflaschen handeln. **In** einer Getränkebehälterkiste können sich Getränkebehälter befinden, welche zum eigenen Betrieb gehören und dort weiterverarbeitet oder aufbereitet werden können, wobei sich in derselben Getränkebehälterkiste zudem Getränkebehälter befinden, welche zu einem fremden Betrieb gehören und welche nicht zur Weiterverarbeitung oder zur Aufbereitung im eigenen Betrieb vorbestimmt sind.

Der Auspacker umfasst eine erste Transporteinrichtung für Getränkebehälterkisten und eine zweite Transporteinrichtung für Getränkebehälterkisten. Insbesondere kann es sein, dass der Auspacker eine erste Transporteinrichtung für Getränkebehälterkisten mit einer ersten Transportrichtung und eine zweite Transporteinrichtung für Getränkebehälterkisten mit einer zweiten Transportrichtung umfasst, wobei die erste Transportrichtung und die zweite Transportrichtung entgegengesetzt zueinander verlaufen und im Wesentlichen parallel zueinander orientiert sind. Alternativ oder ergänzend hierzu kann es sein, dass die erste Transporteinrichtung und die zweite Transporteinrichtung als Horizontalfördereinrichtung ausgebildet sind und jeweils ein umlaufend angetriebenes Fördermittel umfassen, welches eine Aufstandsfläche für Getränkebehälterkisten bereitstellt.

Sofern die erste Transportrichtung und die zweite Transportrichtung entgegengesetzt zueinander verlaufen, wenn der Industrieroboter Getränkebehälterkisten im Rahmen der Transferbewegung von einer solchen ersten Transporteinrichtung auf eine solche zweite Transporteinrichtung überführt, besitzt der Auspacker einen kompakten Aufbau und ermöglicht zudem einen einfachen Zugang zum Zwecke einer Wartung oder Reparatur einzelner Bestandteile des Auspacker. Eine solche Ausgestaltung bzw. ein solches Layout hat sich gegenüber bekannten Auspackern bewährt, um einen Auspacker sehr kompakt und platzsparend aufstellen zu können. Ein Bediener oder eine Serviceperson kann sich zwischen gegenüberliegenden Seiten des Auspackers hin und her bewegen, ohne dass der Bediener oder die Serviceperson hierzu Transporteinrichtungen überqueren muss.

Die Getränkekisten können bspw. durch Kunststoffkästen gebildet sein. Davon abgesehen kommen auch weitere Materialien in Betracht, welche der Fachperson bekannt sind und aus diesem Grunde nicht ausdrücklich erwähnt werden. Es sei aber an dieser Stelle betont, dass die hier so bezeichneten Getränkebehälterkisten auch durch Kartonkisten oder andere Umverpackungen oder Sekundärverpackungen gebildet sein können. So wird zwar im vorliegenden Ausführungsbeispiel generell von Getränkebehälterkisten gesprochen, was aber nicht ausschließt, dass die gehandhabten Getränkebehälter oder Primärverpackungen auch aus anderen Umverpackungen entnommen werden können. So können die Umverpackungen bspw. durch Kartonkisten o. dgl. Behältnisse gebildet sein, so dass der hier verwendete Begriff der Getränkebehälterkiste im vorliegenden Zusammenhang als umfassend verstanden werden soll. Es können unter den hier verwendeten Begriff der Getränkebehälterkiste somit auch solche Sekundärverpackungen fallen, die im landläufigen Sinne zwar nicht als Getränkekästen bezeichnet werden, die aber dennoch das Merkmal der Sekundärverpackung oder Umverpackung erfüllen.

Bewährt haben sich Ausführungsformen, bei denen die erste Transporteinrichtung und die zweite Transporteinrichtung derart positioniert sind, dass sie senkrecht zur ersten Transportrichtung und senkrecht zur zweiten Transportrichtung zumindest abschnittsweise und insbesondere überwiegend oder sogar vollständig miteinander fluchten.

Es kann sein, dass die erste Transporteinrichtung eine erste Transportebene zur Förderung von Getränkebehälterkisten ausbildet und dass die zweite Transporteinrichtung eine zweite Transportebene zur Förderung von Getränkebehälterkisten ausbildet, wobei sich die erste Transportebene und die zweite Transportebene im Wesentlichen auf identischem vertikalem Höhenniveau befinden.

Alternativ oder ergänzend hierzu kann es sein, dass der Auspacker eine Überschubplatte umfasst, die zwischen der ersten Transporteinrichtung und der zweiten Transporteinrichtung positioniert ist und im Wesentlichen bündig an die erste Transporteinrichtung und an die zweite Transporteinrichtung anschließt. Eine Längserstreckung der Überschubplatte kann hierbei parallel zur ersten Transportrichtung und parallel zur zweiten Transportrichtung verlaufen. Die Überschubplatte kann zum gleitenden Schieben von Getränkebehälterkisten von der ersten Transporteinrichtung auf die zweite Transporteinrichtung ausgebildet sein. Eine Ebene der Überschubplatte, entlang der Getränkebehälterkisten entlang der Überschubplatte von der ersten Transporteinrichtung auf die zweite Transporteinrichtung schiebbar sind, kann sich auf identischem vertikalem Höhenniveau mit der vorherig bereits erwähnten ersten Transportebene und mit der vorherig bereits erwähnten zweiten Transportebene befinden.

Auch sind Ausführungsformen vorstellbar, bei denen die erste Transporteinrichtung eine erste Transportebene zur Förderung von Getränkebehälterkisten ausbildet und bei denen die zweite Transporteinrichtung eine zweite Transportebene zur Förderung von Getränkebehälterkisten ausbildet, wobei sich ein Höhenniveau der ersten Transportebene oberhalb oder unterhalb eines Höhenniveaus der zweiten Transportebene befindet.

Der Auspacker umfasst zudem einen Industrieroboter nach einem der vorhergehend Ausführungsbeispiele, wobei der Industrieroboter zum Überführen von Getränkebehälterkisten von der ersten Transporteinrichtung auf die zweite Transporteinrichtung im Rahmen der Transferbewegung ausgebildet ist.

Weiter ist vorgesehen, dass der Industrieroboter oder ein weiterer Industrieroboter zur Entnahme von Getränkebehältern aus den auf die zweite Transporteinrichtung überführten Getränkebehälterkisten ausgebildet ist.

Wie es vorhergehend erwähnt wurde, kann es sein, dass die erste Transporteinrichtung eine erste Transportebene zur Förderung von Getränkebehälterkisten ausbildet und dass die zweite Transporteinrichtung eine zweite Transportebene zur Förderung von Getränkebehälterkisten ausbildet, wobei sich ein Höhenniveau der ersten Transportebene oberhalb oder unterhalb eines Höhenniveaus der zweiten Transportebene befindet. Bei solchen Ausführungsformen hat es sich zudem bewährt, wenn der Industrieroboter zum Anheben oder zum Absenken von entgegengenommenen Getränkebehälterkisten ausgebildet ist, um diese von der ersten Transporteinrichtung an die zweite Transporteinrichtung zu überführen.

**In** diversen Ausführungsformen kann es sein, dass die erste Transporteinrichtung zum geländerlosen Fördern von Getränkebehälterkisten ausgebildet ist. Demnach kann es sein, dass sich im Bereich der ersten Transporteinrichtung keine Geländer befinden, die sich parallel zur Längsrichtung der ersten Transporteinrichtung erstrecken und zum Führen von Getränkebehälterkisten ausgebildet sind. Alternativ oder ergänzend hierzu kann es sein, dass die zweite Transporteinrichtung zum geländerlosen Fördern von Getränkebehälterkisten ausgebildet ist. Demnach kann es sein, dass sich im Bereich der zweiten Transporteinrichtung keine Geländer befinden, die sich parallel zur Längsrichtung der zweiten Transportrichtung erstrecken und zum Führen von Getränkebehälterkisten ausgebildet sind.

Solche Auspacker besitzen einen einfachen Aufbau und ermöglichen zudem, dass Getränkebehälterkisten ohne ein Anheben von der ersten Transporteinrichtung oder mit geringem Anheben von der ersten Transporteinrichtung an die zweite Transporteinrichtung überführbar sind.

Alternativ oder ergänzend hierzu kann es sein, dass der Industrieroboter im Rahmen der Transferbewegung zum gemeinsamen Entgegennehmen und Überführen jeweils mehrerer Getränkebehälterkisten an die zweite Transporteinrichtung ausgebildet ist.

Alternativ oder ergänzend hierzu kann es sein, dass der Industrieroboter zur Bewegung des Arbeitswerkzeuges entlang einer Raumrichtung ausgebildet ist, die schräg oder senkrecht zur vorherig erwähnten ersten Transportrichtung und zur vorherig erwähnten zweiten Transportrichtung verläuft.

Alternativ oder ergänzend hierzu kann es sein, dass das Arbeitswerkzeug des Industrieroboters mehrere als Klemm- und/oder Greifelemente ausgebildete Halteinstrumente besitzt, von denen sich jeweils zwei Klemm- und/oder Greifelemente paarweise gegenüberliegen und von denen jeweils zwei Klemm- und/oder Greifelemente zum Entgegennehmen einer jeweiligen im Bereich der ersten Transporteinrichtung angeordneten Getränkebehälterkiste ausgebildet sind. Insbesondere kann es hierbei sein, dass das Arbeitswerkzeug des Industrieroboters mehrere Paare aus jeweils zwei Klemm-und/oder Greifelementen und vorzugsweise mindestens drei Paare aus jeweils zwei Klemm- und/oder Greifelementen oder genau fünf Paare aus jeweils zwei Klemm-und/oder Greifelementen umfasst.

Alternativ oder ergänzend hierzu kann es sein, dass das Arbeitswerkzeug des Industrieroboters oder ein weiteres Arbeitswerkzeug des weiteren als Bestandteil des Auspackers ausgebildeten Industrieroboters mehrere über Unterdruck arbeitende Greifinstrumente umfasst, von denen ein jeweiliges Greifinstrument zum Erfassen eines jeweiligen in einer Getränkebehälterkiste angeordneten Getränkebehälters ausgebildet ist. Hierbei kann es sein, dass das Arbeitswerkzeug des Industrieroboters oder ein weiteres Arbeitswerkzeug des weiteren Industrieroboters mehrere Greifköpfe mit jeweils mehreren über Unterdruck arbeitenden Greifinstrumenten umfasst, wobei die Greifköpfe abstandsunveränderlich an einer Brücke des Arbeitswerkzeuges bzw. an einer Brücke des weiteren Arbeitswerkzeuges angeordnet sind.

In diversen Ausführungsformen kann der Auspacker einen ersten Industrieroboter und einen zweiten Industrieroboter aufweisen, wobei der erste Industrieroboter eine Ausführungsform des vorhergehend beschriebenen Arbeitswerkzeuges umfasst. Der erste Industrieroboter kann somit zum Überführen von Getränkebehälterkisten auf die zweite Transporteinrichtung im Rahmen der Transferbewegung ausgebildet sein. Der zweite Industrieroboter kann zur Entnahme von Getränkebehältern aus Getränkebehälterkisten über sein weiteres Arbeitswerkzeug ausgebildet sein, welche Getränkebehälterkisten mittels des ersten Industrieroboters auf die zweite Transporteinrichtung überführt worden sind.

Die Aufgabe des Verbringens von Getränkebehälterkisten von der ersten Transporteinrichtung an die zweite Transporteinrichtung und die Aufgabe einer Entnahme von Getränkebehältern aus den Getränkebehälterkisten im Bereich der zweiten Transporteinrichtung sind hierbei funktional voneinander getrennt, wobei der erste Industrieroboter das Überführen von Getränkebehälterkisten übernimmt und der zweite Industrieroboter für die Entnahme von Getränkebehältern zuständig ist. Solche Auspacker können mit hoher Taktfrequenz Getränkebehälter aus Getränkebehälterkisten entnehmen und leere Getränkebehälterkisten abtransportieren.

Es kann sein, dass der Industrieroboter zu einem Schieben von Getränkebehälterkisten von der ersten Transporteinrichtung auf die zweite Transporteinrichtung ausgebildet ist. Bewährt hat es sich hierbei, wenn der Industrieroboter zum Bewegen seines Arbeitswerkzeuges entlang einer Raumrichtung ausgebildet ist, die schräg oder senkrecht zur ersten Transportrichtung und zur zweiten Transportrichtung sowie horizontal verläuft.

Auch kann es sein, dass der Industrieroboter zu einem Anheben von Getränkebehälterkisten und zu einem Umsetzen von angehobenen Getränkebehälterkisten von der ersten Transporteinrichtung auf die zweite Transporteinrichtung über sein Arbeitswerkzeug ausgebildet ist. Bei solchen Ausführungsform ist optional vorstellbar, dass sich gemäß der vorhergehenden Beschreibung ein Höhenniveau der ersten Transportebene der ersten Transporteinrichtung oberhalb oder unterhalb eines Höhenniveaus der zweiten Transportebene der zweiten Transporteinrichtung befindet.

Bewährt haben sich auch Ausführungsformen, bei denen
- ausschließlich der Industrieroboter oder der weitere Industrieroboter zum Überführen von Getränkebehälterkisten von der ersten Transporteinrichtung auf die zweite Transporteinrichtung ausgebildet ist und/oder bei denen
- keine umlaufenden Bänder vorgesehen sind, über welche umlaufenden Bänder Getränkebehälterkisten von der ersten Transporteinrichtung an die zweite Transporteinrichtung überführt werden und/oder bei denen
- die erste Transporteinrichtung und die zweite Transporteinrichtung unterschiedliche Endbereiche besitzen und/oder bei denen
- es sich bei der ersten Transporteinrichtung und bei der zweiten Transporteinrichtung um separate Transporteinrichtungen handelt, welche voneinander entkoppelt sind, wobei keine strömungstechnische Verbindung zwischen der ersten Transporteinrichtung und der zweiten Transporteinrichtung über ein Transportband besteht. Es kann hierbei sinnvollerweise sein, dass die erste Transporteinrichtung mindestens einen ersten Aktuator und mindestens ein erstes umlaufend über den mindestens einen ersten Aktuator angetriebenes Fördermittel umfasst, bei welchem mindestens einen ersten umlaufend angetriebenen Fördermittel es sich insbesondere um mindestens ein erstes umlaufend angetriebenes Transportband handeln kann. Die zweite Transporteinrichtung kann zudem mindestens einen zweiten Aktuator und mindestens ein zweites umlaufend über den mindestens einen zweiten Aktuator angetriebenes Fördermittel umfassen, bei welchem mindestens einen zweiten umlaufend angetriebenen Fördermittel es sich insbesondere um mindestens ein zweites umlaufend angetriebenes Transportband handeln kann.

Alternativ oder ergänzend hierzu kann es sein, dass der Auspacker eine Einhausung besitzt, innerhalb welcher Einhausung der Industrieroboter angeordnet ist, wobei sich die erste Transporteinrichtung und die zweite Transporteinrichtung jeweils in die Einhausung hinein erstrecken und wobei ein Endbereich der ersten Transporteinrichtung und ein Endbereich der zweiten Transporteinrichtung sich innerhalb der Einhausung befinden. Somit kann es sein, dass die erste Transporteinrichtung und die zweite Transporteinrichtung innerhalb der Einhausung enden.

Auch haben sich Ausführungsformen bewährt, bei denen die erste Transporteinrichtung unterbrechungsfrei angetrieben ist. Solche Ausführungsformen zeichnen sich durch einen hohen Durchsatz und durch einen geringen Verschleiß der ersten Transporteinrichtung aus, da ein Arbeiten der ersten Transporteinrichtung mit Unterbrechungen zu einem vorzeitigen Verschleiß führen kann.

Auch kann es sein, dass der Auspacker eine dritte Transporteinrichtung umfasst, wobei der Industrieroboter oder der weitere Industrieroboter zum Absetzen von Getränkebehältern, die aus Getränkebehälterkisten entnommen wurden, auf der dritten Transporteinrichtung ausgebildet sind. Bewährt haben sich hierbei Ausführungsformen, bei denen die erste Transporteinrichtung und die zweite Transporteinrichtung auf derselben Seite der dritten Transporteinrichtung angeordnet sind. Insbesondere hat es sich bewährt, wenn die zweite Transporteinrichtung zudem zwischen der ersten Transporteinrichtung und der dritten Transporteinrichtung angeordnet ist. Es kann hierbei sein, dass zwischen der zweiten Transporteinrichtung und der dritten Transporteinrichtung ein senkrecht zur zweiten Transportrichtung orientierter Abstand mit einer Größe von wenigstens 50cm ausgebildet ist. Hierdurch kann sein Bediener oder eine mit der Wartung oder Reparatur des Auspackers zuständige Person über diesen Abstand zwischen die zweite Transporteinrichtung und die dritte Transporteinrichtung gelangen und ggf. Komponenten des Auspackers warten oder reparieren.

Die dritte Transporteinrichtung kann zum Fördern von Getränkebehältern entlang einer dritten Transportrichtung ausgebildet sein, welche dritte Transportrichtung parallel zur vorherig erwähnten ersten Transportrichtung und parallel zur vorherig erwähnten zweiten Transportrichtung verläuft.

In bewährten Ausführungsformen umfasst der Auspacker einen Anschlag für Getränkebehälterkisten, der abgestimmt auf das Überführen von Getränkebehälterkisten im Bereich der ersten Transporteinrichtung entlang der ersten Transportrichtung motorisch hin und her bewegbar ausgebildet ist. Somit kann es sein, dass der Anschlag derart bewegbar ausgebildet ist, dass der Anschlag mit den Getränkebehälterkisten mitbewegt wird, wenn sich die Getränkebehälterkisten auf der ersten Transporteinrichtung befinden. Hierbei kann der Anschlag mit einer zuvorderst transportierten Getränkebehälterkiste während einer Entgegennahme über das Arbeitswerkzeug des Industrieroboters in Oberflächenkontakt stehen.

Sofern der Auspacker einen Anschlag umfasst, kann es sein, dass der Anschlag einseitig im Bereich der ersten Transporteinrichtung gelagert ist. Die Lagerung kann an derjenigen Seite der ersten Transporteinrichtung erfolgen, welche der zweiten Transporteinrichtung und/oder der dritten Transporteinrichtung abgewandt ist. Durch die einseitige Lagerung besitzt der Auspacker einen einfachen Aufbau. Zudem wird eine Möglichkeit geschaffen, bei der Getränkebehälterkisten einfach und ohne zusätzliche Schritte von der ersten Transporteinrichtung auf die zweite Transporteinrichtung geschoben werden können, da eine zweiseitige Lagerung des Anschlags ein Überschieben erschweren oder sogar unmöglich machen kann.

Die Erfindung betrifft zudem ein Verfahren zum Manipulieren von Getränkebehälterkisten. Merkmale, welche vorhergehend bereits zu diversen Ausführungsformen des Arbeitswerkzeuges, des Industrieroboters und/oder des Auspackers erwähnt wurden, können ebenso bei den nachfolgenden Ausführungsformen des erfindungsgemäßen Verfahrens vorgesehen sein, ohne erneut erwähnt zu werden. Ebenso können nachfolgend zu diversen Ausführungsformen des Verfahrens beschriebene Merkmale bei den vorhergehend bereits erwähnten Ausführungsformen des Auspackers, des Industrieroboters bzw. des Arbeitswerkzeuges vorgesehen sein, ohne erneut erwähnt zu werden. Die vorhergehend erwähnten Ausführungsformen des Industrieroboters bzw. des Auspackers können ggf. zur Durchführung der nachfolgend beschriebenen Ausführungsformen des erfindungsgemäßen Verfahrens ausgebildet sein.

Ein Schritt des Verfahrens sieht ein Betätigen mehrerer Halteinstrumente eines Arbeitswerkzeuges vor, wodurch mehrere Getränkebehälterkisten am Arbeitswerkzeug festgesetzt werden. Zudem werden die Getränkebehälterkisten an einen Zielort verbracht, wozu das Arbeitswerkzeug mit den hieran festgesetzten Getränkebehälterkisten eine Transferbewegung durchführt.

Bei einem weiteren Schritt ist ein Ausrichten der mehreren Getränkebehälterkisten über das Arbeitswerkzeug vorgesehen, wozu mehrere Getränkebehälterkisten bei einer aufgehobenen Betätigung der mehreren Halteinstrumente mit Anschlägen des Arbeitswerkzeuges in Oberflächenkontakt gebracht werden.

Es kann hierbei sein, dass die mehreren Anschläge abstandsunveränderlich mit einer Brücke des Arbeitswerkzeuges verbunden sind. Das Arbeitswerkzeug kann hierbei am Zielort bei aufgehobener Betätigung der mehreren Halteinstrumente eine Versatzbewegung durchführen, wobei die Anschläge des Arbeitswerkzeuges während der Versatzbewegung mit den Getränkebehälterkisten in Oberflächenkontakt gelangen und die Getränkebehälterkisten ausrichten.

Weiter kann es sein, dass die Getränkebehälterkisten über eine erste Transporteinrichtung bewegt werden und über die mehreren Halteinstrumente am Arbeitswerkzeug festgesetzt werden, während sich die Getränkebehälterkisten auf der ersten Transporteinrichtung befinden. Hierbei kann es sein, dass die am Arbeitswerkzeug festgesetzten Getränkebehälterkisten mit der Transferbewegung auf eine zweite Transporteinrichtung überführt werden und dass das Ausrichten der Getränkebehälterkisten auf der zweiten Transporteinrichtung erfolgt, wozu die Getränkebehälterkisten mit Anschlägen des Arbeitswerkzeuges in Oberflächenkontakt gebracht werden.

Denkbar ist, dass die Anschläge abstandsunveränderlich mit einer Brücke des Arbeitswerkzeuges verbunden sind und dass die Getränkebehälterkisten mit den Anschlägen in Oberflächenkontakt gebracht werden, indem das Arbeitswerkzeug in einer vorgegebenen Position verweilt und die Getränkebehälterkisten durch eine Bewegung über die zweite Transporteinrichtung auf die Anschläge auffahren.

Auch kann es sein, dass die Anschläge abstandsunveränderlich mit einer Brücke des Arbeitswerkzeuges verbunden sind und dass die Getränkebehälterkisten mit den Anschlägen in Oberflächenkontakt gebracht werden, indem das Arbeitswerkzeug entlang einer Transportrichtung der zweiten Transporteinrichtung versetzt wird bzw. indem das Arbeitswerkzeug entlang einer Transportrichtung der zweiten Transporteinrichtung eine Hubbewegung ausführt.

Alternativ oder ergänzend hierzu kann es sein, dass die Getränkebehälterkisten zum Ausrichten bei einer aufgehobenen Betätigung der mehreren Halteinstrumente über ihre jeweilige Innenmantelfläche mit Anschlägen des Arbeitswerkzeuges in Oberflächenkontakt gebracht werden.

Es kann sein, dass die Getränkebehälterkisten zum Ausrichten bei einer aufgehobenen Betätigung der mehreren Halteinstrumente über einen bestimmten Bereich ihrer jeweiligen Innenmantelfläche mit Anschlägen des Arbeitswerkzeuges in Oberflächenkontakt gebracht werden, welcher jeweilige bestimmte Bereich über eine jeweilige Wand einer jeweiligen Getränkebehälterkiste ausgebildet wird, welche jeweilige Wand sich entlang einer zweiten Transportrichtung der zweiten Transporteinrichtung zuvorderst befindet.

Auch kann es sein, dass die Getränkebehälterkisten zum Ausrichten bei einer aufgehobenen Betätigung der mehreren Halteinstrumente über einen bestimmten Bereich ihrer jeweiligen Innenmantelfläche mit Anschlägen des Arbeitswerkzeuges in Oberflächenkontakt gebracht werden, welcher jeweilige bestimmte Bereich über eine jeweilige Wand einer jeweiligen Getränkebehälterkiste ausgebildet wird, welche jeweilige Wand sich entlang einer zweiten Transportrichtung der zweiten Transporteinrichtung zuhinterst befindet.

Bewährt hat es sich bei dem Verfahren, wenn es sich bei dem Arbeitswerkzeug um ein Arbeitswerkzeug eines Portalroboters handelt.

Bei dem Verfahren kann es sein, dass die Getränkebehälterkisten über eine erste Transporteinrichtung entlang einer ersten Transportrichtung bewegt werden. Weiter kann es sein, dass die Getränkebehälterkisten über die zweite Transporteinrichtung entlang einer zweiten Transportrichtung bewegt werden, welche zweite Transportrichtung entgegengesetzt und parallel zur ersten Transportrichtung orientiert ist.

Bei dem Verfahren kann ein weiteres Arbeitswerkzeug vorgesehen sein, das mehrere Saug- und/oder Greifinstrumente umfasst. Hierbei kann es sein, dass Getränkebehälter aus den Getränkebehälterkisten über das weitere Arbeitswerkzeug entnommen werden, welche Getränkebehälterkisten bereits an den Zielort überführt und ausgerichtet worden sind.

Auch kann es sein, dass nach dem Ausrichten dasselbe Arbeitswerkzeug Getränkebehälter aus den Getränkebehälterkisten entnimmt, welches vorhergehend die Getränkebehälterkisten vorhergehend an den Zielort überführt und ausgerichtet hat.

Alternativ oder ergänzend hierzu kann es sein, dass das Arbeitswerkzeug Getränkebehälterkisten an den Zielort verbringt, indem es Getränkebehälterkisten von einer ersten Transporteinrichtung auf eine zweite Transporteinrichtung schiebt.

Denkbar ist auch, dass das Arbeitswerkzeug Getränkebehälterkisten an den Zielort verbringt und hierbei von einer ersten Transporteinrichtung auf eine zweite Transporteinrichtung verbringt oder überführt, wobei bei dem Verfahren zudem vorgesehen ist, dass
- Getränkebehälterkisten ausschließlich über das Arbeitswerkzeug von der ersten Transporteinrichtung auf die zweite Transporteinrichtung überführt oder verbracht werden bzw. dass
- keine umlaufenden Bänder vorgesehen sind, über welche umlaufenden Bänder Getränkebehälterkisten von der ersten Transporteinrichtung an die zweite Transporteinrichtung überführt oder verbracht werden.

Alternativ oder ergänzend hierzu kann es sein, dass das Arbeitswerkzeug Getränkebehälterkisten an den Zielort verbringt und hierbei Getränkebehälterkisten von einer ersten Transporteinrichtung auf eine zweite Transporteinrichtung verbringt oder überführt, wobei die erste Transporteinrichtung unterbrechungsfrei angetrieben wird.

Alternativ oder ergänzend hierzu kann es sein, dass das Arbeitswerkzeug Getränkebehälterkisten an den Zielort verbringt und hierbei Getränkebehälterkisten von einer ersten Transporteinrichtung auf eine zweite Transporteinrichtung verbringt oder überführt, wobei ein Anschlag vorgesehen ist, welcher im Bereich der ersten Transporteinrichtung mit einer zuvorderst transportierten Getränkebehälterkiste in Kontakt gebracht wird und weiterhin mit der zuvorderst transportierten Getränkebehälterkiste in Kontakt steht, bevor und/oder während die Halteinstrumente zum Festsetzen der Getränkebehälterkisten betätigt werden.

Alternativ oder ergänzend hierzu kann es sein, dass die mehreren Getränkebehälterkisten am Arbeitswerkzeug festgesetzt werden, woraufhin das Arbeitswerkzeug beschleunigt wird, wodurch ein Abstand zwischen den festgesetzten Getränkebehälterkisten und nachfolgenden Getränkebehälterkisten entsteht, worauf folgend das Arbeitswerkzeug die festgesetzten Getränkebehälterkisten an den Zielort überführt und hierzu die festgesetzten Getränkebehälterkisten von einer ersten Transporteinrichtung auf eine zweite Transporteinrichtung überführt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 10 zeigen schematische Ansichten einer Ausführungsform eines erfindungsgemäßen Auspackers und verdeutlichen Schritte, wie sie in diversen Ausführungsformen des erfindungsgemäßen Verfahrens vorgesehen sein können.

Figuren 6 und 7 zeigen hierbei ein Ausrichten von Getränkebehälterkisten, wie es in diversen Ausführungsformen vorgesehen sein kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

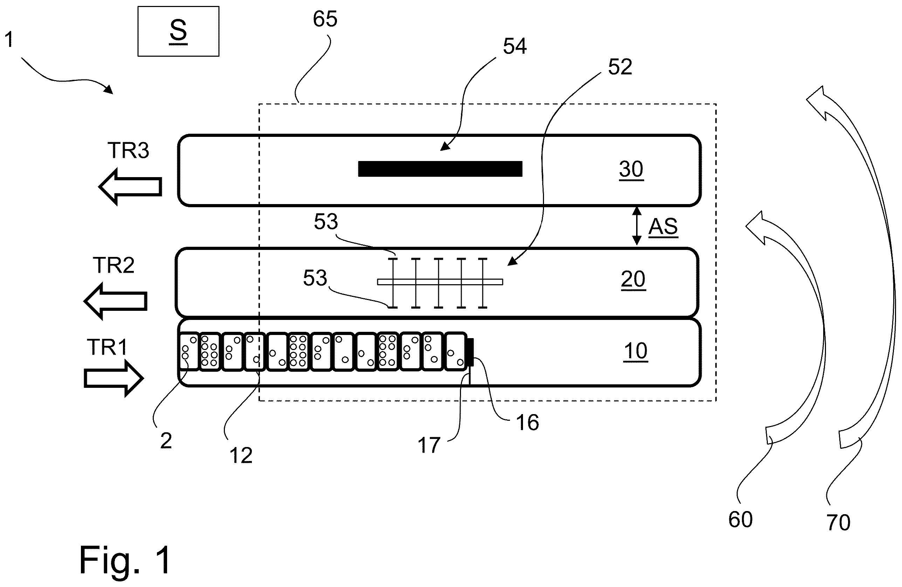

Die Fig. 1 zeigt eine schematische Ansicht einer Ausführungsform eines erfindungsgemäßen Auspackers 1 und einen ersten Schritt, wie er in diversen Ausführungsformen des erfindungsgemäßen Verfahrens vorgesehen sein kann. Der Auspacker 1 kann Getränkebehälter 2 aus Getränkebehälterkisten 12 entnehmen. Die entnommenen Getränkebehälter 2 und die entleerten Getränkebehälterkisten 12 werden hierauf gereinigt. Nach einer Reinigung werden die Getränkebehälter 2 erneut befüllt und in eine gereinigte Getränkebehälterkiste 12 eingebracht. Vorliegend sind die Getränkebehälterkisten 12 nicht vollständig befüllt und umfassen jeweils eine unterschiedliche Anzahl an Getränkebehältern 2. Die Anzahl an Getränkebehältern 2, die in einer jeweiligen Getränkebehälterkiste 12 aufgenommen ist, kann hierbei variieren. Es kann auch sein, dass sämtliche Getränkebehälterkisten 12 vollständig befüllt sind und dass keine teilweise befüllten Getränkebehälterkisten 12 vom Auspacker 1 ausgepackt werden.

Es sei an dieser Stelle klarstellend darauf hingewiesen, dass zwar im vorliegenden Ausführungsbeispiel generell von Getränkebehälterkisten 12 gesprochen wird, dass dies aber nicht ausschließt, dass die mittels des Auspackers 1 gehandhabten Getränkebehälter 2 auch aus anderen Umverpackungen entnommen werden können, die auch als Sekundärverpackungen zur Aufnahme der als Primärverpackungen zu sehenden Getränkebehälter 2 betrachtet werden können. So können die Umverpackungen grundsätzlich auch durch Kartonkisten o. dgl. Behältnisse gebildet sein, so dass der Begriff der Getränkebehälterkiste 12 im vorliegenden Zusammenhang als umfassend verstanden werden soll. Es können unter den hier verwendeten Begriff der Getränkebehälterkiste 12 somit auch solche Sekundärverpackungen fallen, die im landläufigen Sinne zwar nicht als Getränkekästen bezeichnet werden, die aber das Merkmal der Sekundärverpackung oder Umverpackung erfüllen.

Der Auspacker 1 umfasst eine erste Transporteinrichtung 10, eine zweite Transporteinrichtung 20 und eine dritte Transporteinrichtung 30. Bestandteil des Auspackers 1 sind zudem ein erster Industrieroboter und ein zweiter Industrieroboter, die in Zusammenarbeit zum Überführen von Getränkebehälterkisten 12 von einer ersten Transporteinrichtung 10 auf eine zweite Transporteinrichtung 20 sowie zur Entnahme von Getränkebehältern 2 aus den bereits auf die zweite Transporteinrichtung 20 überführten Getränkebehälterkisten 12 ausgebildet sind.

Denkbar ist auch, dass anstelle des nachfolgend beschriebenen ersten Industrieroboters und zweiten Industrieroboters lediglich ein Industrieroboter vorgesehen ist. Sofern dies der Fall ist, kann der eine Industrieroboter allein über sein Arbeitswerkzeug 52 die nachfolgend zum ersten Industrieroboter und zum zweiten Industrieroboter beschriebenen Aufgaben und Funktionen vollständig übernehmen.

Vom ersten Industrieroboter ist aus Gründen der Übersichtlichkeit lediglich sein erstes Arbeitswerkzeug 52 zu erkennen ist, welches vom ersten Industrieroboter, bei dem es sich um einen Portalroboter handelt, getragen und geführt wird. Bei dem ersten Arbeitswerkzeug 52 handelt es sich um ein Greifwerkzeug, das zur gemeinsamen und klemmenden Entgegennahme mehrerer Getränkebehälterkisten 12 von der ersten Transporteinrichtung 10 ausgebildet ist.

Auch vom zweiten Industrieroboter, bei dem es sich ebenso um einen Portalroboter handelt, ist lediglich das zweite Arbeitswerkzeug 54 schematisch dargestellt. Das zweite Arbeitswerkzeug 54 umfasst mehrere Sauginstrumente, über die das zweite Arbeitswerkzeug 54 eine Verbindung zu den Getränkebehältern 2 über Unterdruck herstellen kann, um die Getränkebehälter 2 nachfolgend über das zweite Arbeitswerkzeug 54 bzw. über den zweiten Industrieroboter aus den Getränkebehälterkisten 12 zu entnehmen. Mehrere Sauginstrumente sind hierbei Bestandteil eines Greifkopfes des zweiten Arbeitswerkzeuges 54. Mehrere Greifköpfe sind abstandsunveränderlich an einer Brücke des zweiten Arbeitswerkzeuges 54 angeordnet.

Um entnommene Getränkebehälter 2 einer weiteren Verwendung zuzuführen, umfasst der Auspacker 1 eine dritte Transporteinrichtung 30, auf der die entnommenen Getränkebehälter 2 abtransportiert werden. Die erste Transporteinrichtung 10, die zweite Transporteinrichtung 20 und die dritte Transporteinrichtung 30 sind derart angeordnet, dass sich die zweite Transporteinrichtung 20 zwischen der ersten Transporteinrichtung 10 und der dritten Transporteinrichtung 30 befindet. Zwischen der zweiten Transporteinrichtung 20 und der dritten Transporteinrichtung 30 ist zudem ein Abstand AS ausgebildet. Dieser Abstand AS hat mindestens eine solche Breite, dass ein Benutzer im Bereich des ausgebildeten Abstandes AS entlang der zweiten Transporteinrichtung 20 bzw. entlang der dritten Transporteinrichtung 30 gehen kann, um ggf. Wartungs- und/oder Reparaturarbeiten am Auspacker 1 vorzunehmen. Der Abstand AS beträgt mindestens 50 cm, kann jedoch in der Praxis auch größer ausgebildet sein.

**In** der Praxis besteht bei Auspackern, die aus dem Stand der Technik bekannt sind, häufig ein Problem, wenn Reparaturarbeiten am Auspacker vorgenommen werden müssen. Transporteinrichtungen erstrecken sich regelmäßig linear bis zu einer nächsten Station, wodurch bekannte Auspacker einen großen Aufbau besitzen und wodurch die Zugänglichkeit einzelner Komponenten des Auspackers erschwert wird. So kann es beispielsweise sein, dass über Transporteinrichtungen hinweggestiegen werden muss, um auf gegenüberliegende Seiten zu gelangen oder dass lange Umwege in Kauf genommen werden müssen, um Wartungs- oder Reparaturarbeiten durchführen zu können. Der Auspacker 1 kann ohne solche Probleme aufgestellt werden und ohne solche Probleme arbeiten. Wie es in Fig. 1 angedeutet ist, werden Getränkebehälterkisten 12 über die erste Transporteinrichtung 10 entlang einer ersten Transportrichtung TR1 als Kontaktföderung transportiert, bei welcher Kontakförderung unmittelbar benachbarte Getränkebehälterkisten 12 aneinander anstehen. Über die zweite Transporteinrichtung 20 erfolgt ein Rücktransport von entleerten Getränkebehälterkisten 12 entlang einer zweiten Transportrichtung TR2, wobei die erste Transportrichtung TR1 und die zweite Transportrichtung TR2 entgegengesetzt und parallel zueinander verlaufen. Eine unmittelbare Strömungsverbindung zum Umleiten von Getränkebehälterkisten 12 von der ersten Transporteinrichtung 10 auf die zweite Transporteinrichtung 20 existiert nicht. Sämtliche Getränkebehälterkisten 12 werden vom ersten Industrieroboter bzw. vom ersten Arbeitswerkzeug 52 des ersten Industrieroboters umgesetzt und gelangen hierbei von der ersten Transporteinrichtung 10 auf die zweite Transporteinrichtung 20. Bezugsziffer 65 verweist in Fig. 1 auf eine Einhausung, innerhalb welcher Einhausung der erste Industrieroboter und der zweite Industrieroboter angeordnet sind. Die erste Transporteinrichtung 10, die zweite Transporteinrichtung 20 und die dritte Transporteinrichtung 30 erstrecken sich in die Einhausung 65 hinein, wobei sich ein jeweiliger Endbereich der ersten Transporteinrichtung 10, der zweiten Transporteinrichtung 20 und der dritten Transporteinrichtung 30 innerhalb der Einhausung 65 befindet.

Hieraus ergibt sich ein Vorteil im Layout gegenüber bekannten Auspackern. Fig. 1 deutet hierbei auf Verweis mit Bezugsziffer 60 einen ersten Weg an, den ein Bediener oder eine mit der Wartung oder der Reparatur des Auspackers 1 zuständige Person einschlagen kann. Wie es vorhergehend bereits erwähnt wurde, kann diese Person oder der Bediener sich im Bereich des Abstandes AS entlang der zweiten Transporteinrichtung 20 und entlang der dritten Transporteinrichtung 30 bewegen, um Wartungs- oder Reparaturarbeiten an der ersten Transporteinrichtung 10 und an der zweiten Transporteinrichtung 20 vorzunehmen. Auch der erste Industrieroboter und der zweite Industrieroboter können dort ggf. gewartet oder repariert werden, da vorteilhafterweise zwischen der ersten Transporteinrichtung 10 und der zweiten Transporteinrichtung 20 keine unmittelbare Strömungsverbindung besteht und das Überführen von Getränkebehälterkisten 12 ausschließlich über den ersten Industrieroboter bzw. über das erste Arbeitswerkzeug 52 erfolgt.

Sofern Wartungsarbeiten oder Reparaturarbeiten am zweiten Industrieroboter oder an der dritten Transporteinrichtung 30 vorgenommen werden sollen, kann die vorherig erwähnte Person oder der Bediener auch entlang des zweiten Weges 70 zur gegenüberliegenden Seite des Auspackers 1 gelangen. Das in Fig. 1 dargestellte Layout mit den entgegengesetzt und parallel zueinander orientierten Transportrichtung TR1 und TR2 der ersten Transporteinrichtung 10 und der zweiten Transporteinrichtung 20 besitzt somit zahlreiche Vorteile im Hinblick auf eine notwendige Wartung oder Reparatur von einzelnen Komponenten und wirkt sich zudem vorteilhaft auf die Zugänglichkeit einzelner Bestandteile des Auspackers 1 aus.

Wie es bereits erwähnt wurde, werden Getränkebehälterkisten 12 über die erste Transporteinrichtung 10 als Kontaktförderung transportiert, bei welcher Kontaktförderung unmittelbar benachbarte Getränkebehälterkisten 12 aneinander anstehen. Die erste Transporteinrichtung 10 bildet einen Zulauf für zu entleerende Getränkebehälterkisten 12 mit hierin aufgenommenen Getränkebehältern 2 aus. Vorliegend handelt es sich bei den Getränkebehältern 2 um Getränkeflaschen bzw. um Glasflaschen. Mit der entlang der ersten Transportrichtung TR1 zuvorderst transportierten Getränkebehälterkiste 12 steht ein Anschlag 16 in Oberflächenkontakt und gibt die Position der Getränkebehälterkiste 12 vor. Die erste Transporteinrichtung 10 steht mit der Steuereinrichtung S in Verbindung, welche die erste Transporteinrichtung 10 zur kontinuierlichen Förderung von Getränkebehälterkisten 12 ansteuert. Die erste Transporteinrichtung 10 wird daher unterbrechungsfrei betrieben und fördert Getränkebehälterkisten 12 kontinuierlich entlang der ersten Transportrichtung TR1. Der Anschlag 16 ist über die mechanische Koppelung 17 lediglich einseitig an der ersten Transporteinrichtung 10 gelagert, nämlich an einer Seite, welche der zweiten Transporteinrichtung 20 abgewandt ist. Vorteilhafterweise können Getränkebehälterkisten 12 hierdurch einfach auf die zweite Transporteinrichtung 20 geschoben werden, ohne dass die Getränkebehälterkisten 12 angehoben werden müssen.

In der Praxis besitzen Getränkebehälterkisten 12 gewisse Maßabweichungen in der Geometrie, die sich entlang der ersten Transportrichtung TR1 aufsummieren können. Dies ist insbesondere dann der Fall, wenn Getränkebehälterkisten 12 als Kontaktförderung gemäß Fig. 1 auf der ersten Transporteinrichtung 1 bewegt werden, bei welcher Kontaktförderung unmittelbar benachbarte Getränkebehälterkisten 12 aneinander anstehen. Wenn Getränkebehälterkisten 12 über das erste Arbeitswerkzeug 52 von der ersten Transporteinrichtung 10 auf die zweite Transporteinrichtung 20 überführt werden, kann es sein, dass die Abweichungen in der Geometrie zu Problemen bei einer Entnahme von Getränkebehältern 2 aus den Getränkebehälterkisten 12 führen, da die tatsächliche Position, in welcher sich die Getränkebehälterkisten 12 auf der zweiten Transporteinrichtung 20 befinden, von einer erwarteten Soll-Position abweicht. Der Auspacker 1 kann solche Fehler kompensieren, indem das Arbeitswerkzeug 52 Getränkebehälterkisten 12 sowohl entgegennehmen und an die zweite Transporteinrichtung 20 überführen als auch dort bzw. im Bereich der zweiten Transporteinrichtung 20 unter weitgehender Kompensierung der Abweichungen in der Geometrie ausrichten kann, so dass die Position der Getränkebehälterkisten 12 auf der zweiten Transporteinrichtung 20 im Wesentlichen einer erwarteten Soll-Position entspricht.

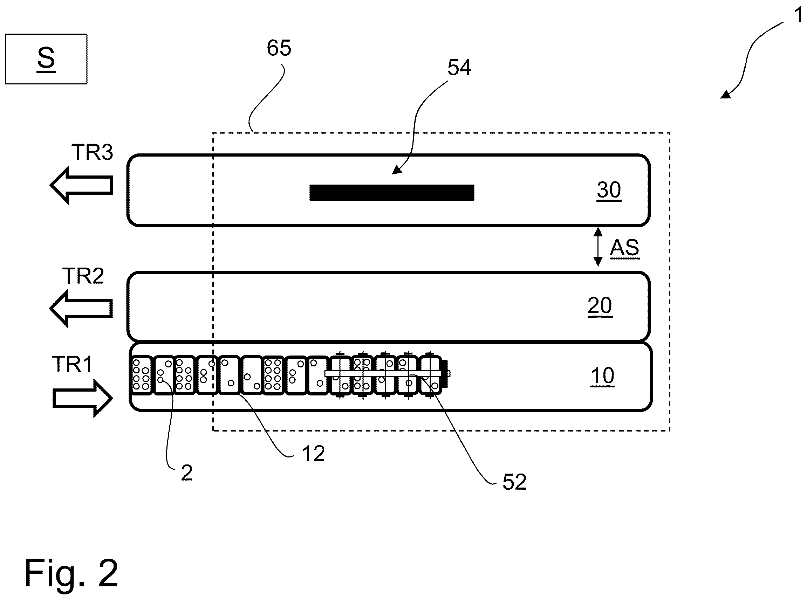

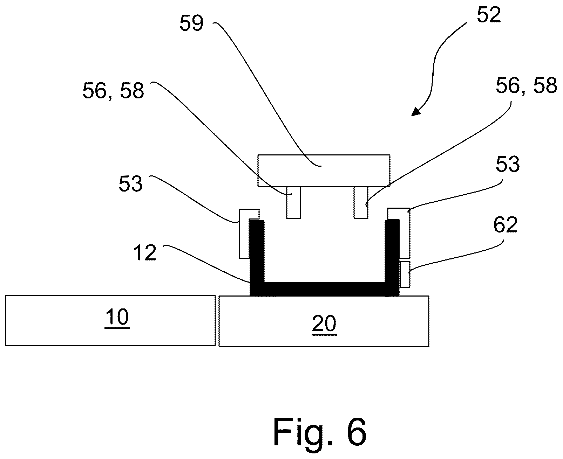

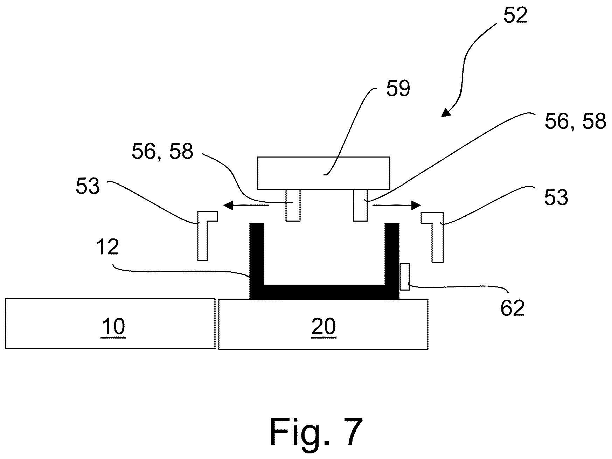

Die weitere Arbeitsweise des Auspackers 1 wird durch die Figuren 2 bis 10 verdeutlicht, wobei Figuren 2 bis 10 die Ausführungsform des Auspackers 1 nach Fig. 1 betreffen. Figuren 6 und 7 zeigen weitere Aspekte beim Ausrichten der Getränkebehälterkisten, mit welchen Abweichungen in der Geometrie zumindest weitgehend aufgehoben oder kompensiert werden können.

In einem Schritt gemäß Fig. 2 wird das erste Arbeitswerkzeug 52 des ersten Industrieroboters von der zweiten Transporteinrichtung 20 zur ersten Transporteinrichtung 10 bewegt, bis sich das erste Arbeitswerkzeug 52 oberhalb mehrerer gemeinsam entgegenzunehmender Getränkebehälterkisten 12 befindet. Da die Getränkebehälterkisten 12 über die erste Transporteinrichtung 10 kontinuierlich bzw. unterbrechungsfrei entlang der ersten Transportrichtung TR1 bewegt werden, wir das erste Arbeitswerkzeug 52 zusammen mit den ersten Getränkebehälterkisten 12 fortbewegt. Die Bewegungsgeschwindigkeit des ersten Arbeitswerkzeuges 52 ist hierbei identisch zur Fördergeschwindigkeit der ersten Transporteinrichtung 10. Während dieser Bewegung wird das erste Arbeitswerkzeug 52 in Richtung der klemmend entgegenzunehmenden Getränkebehälterkisten 12 abgesenkt, bis sich eine jeweilige entgegenzunehmende Getränkebehälterkiste 12 zwischen einem jeweiligen Paar an Halteinstrumenten befindet. Bei den Halteinstrumenten handelt es sich vorliegend um Klemmbacken 53 (vgl. Fig. 1) des ersten Arbeitswerkzeuges 52.

Während einer weiteren Bewegung der Getränkebehälterkisten 12 und des Arbeitswerkzeuges 52 entlang der ersten Transportrichtung TR1 führen die Klemmbacken 53 eine Zustellbewegung aus, wodurch mehrere Getränkebehälterkisten 12 kraftschlüssig am ersten Arbeitswerkzeug 52 gehalten werden. In Fig. 2 haben die Klemmbacken 53 bereits diese Zustellbewegung ausgeführt, wodurch mehrere Getränkebehälterkisten am Arbeitswerkzeug 52 festgesetzt sind. In Fig. 2 sind hierdurch genau fünf Getränkebehälterkisten 12 am Arbeitswerkzeug 52 gehalten, wobei in weiteren Ausführungsformen auch eine andere Anzahl an Getränkebehälterkisten 12 vom Arbeitswerkzeug 52 erfasst werden kann. Beispielsweise kann es sein, dass genau sechs Getränkebehälterkisten 12 am Arbeitswerkzeug 52 gemeinsam gehalten werden.

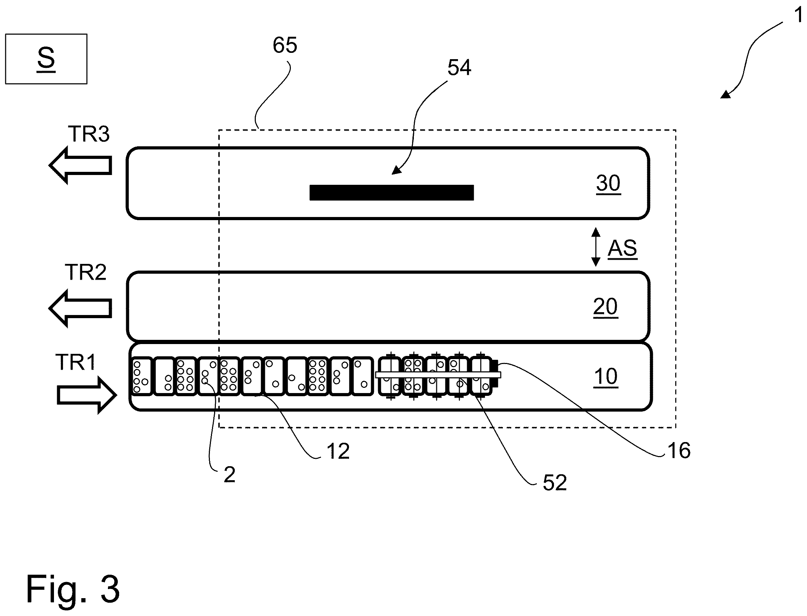

Auf den Verfahrensschritt nach Fig. 2 folgt der Verfahrensschritt nach Fig. 3. Eine Zusammenschau aus Fig. 2 und Fig. 3 verdeutlicht hierbei, dass das erste Arbeitswerkzeug 52 zusammen mit den weiterhin klemmend erfassten bzw. am Arbeitswerkzeug 52 festgesetzten Getränkebehälterkisten 12 gegenüber einer Fördergeschwindigkeit der ersten Transporteinrichtung 10 beschleunigt wird, wodurch eine Distanz entlang der ersten Transportrichtung TR1 zwischen den am ersten Arbeitswerkzeug 52 festgesetzten Getränkebehälterkisten 12 und nachfolgenden Getränkebehälterkisten 12, die sich noch auf der ersten Transporteinrichtung 10 befinden, entsteht. Sowohl der erste Industrieroboter, der das erste Arbeitswerkzeug 52 aufweist, als auch der Anschlag 16, welcher mit einer entlang der ersten Transportrichtung TR1 zuvorderst angeordneten Getränkebehälterkiste 12 im Bereich der ersten Transporteinrichtung 10 in Oberflächenkontakt steht, sind mit der Steuereinrichtung S verbunden. Die Steuereinrichtung S gibt sowohl eine Geschwindigkeit für das erste Arbeitswerkzeug 52 als auch eine Geschwindigkeit für den Anschlag 16 vor, so dass das erste Arbeitswerkzeug 52 und der Anschlag 16 bei Distanzierung der klemmend erfassten Getränkebehälterkisten 12 gemeinsam gegenüber einer Fördergeschwindigkeit der ersten Transporteinrichtung 10 beschleunigt werden. Die beschriebene Distanzierung bietet den Vorteil, dass sich klemmend erfasste Getränkebehälterkiste 12 nicht mit nachfolgenden Getränkebehälterkisten 12 verhaken können, was zu Problemen bei der Überführung der klemmend erfassten Getränkebehälterkisten 12 an die zweite Transporteinrichtung 20 führen kann. In der Praxis kann regelmäßig eine Distanzierung um einen geringfügigen Weg ausreichen, um solche Probleme zu vermeiden.

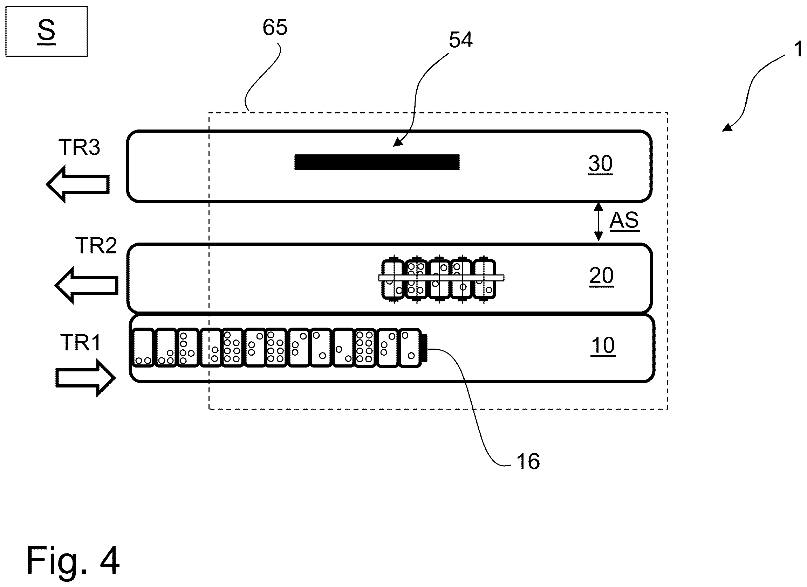

Auf den Verfahrensschritt nach Fig. 3 folgt der Verfahrensschritt nach Fig. 4. Das erste Arbeitswerkzeug 52 bewegt sich ausgehend von der Position nach Fig. 3 zusammen mit den klemmend erfassten Getränkebehälterkisten 12 zur zweiten Transporteinrichtung 20. Diese Bewegung erfolgt schräg zur ersten Transportrichtung TR1. Wenn die Getränkebehälterkisten 12 die erste Transporteinrichtung 10 verlassen haben, wird der Anschlag 16 entgegengesetzt zur ersten Transportrichtung TR1 zurückbewegt und gelangt hierbei in Oberflächenkontakt mit der zuvorderst angeordneten Getränkebehälterkiste 12. Ausgehend von der Position nach Fig. 4 wird der Anschlag 16 erneut mit den Getränkebehälterkisten 12 entlang der ersten Transportrichtung TR1 bewegt, bis weitere Getränkebehälterkisten 12 über die Halteinstrumente des ersten Arbeitswerkzeuges 52 am ersten Arbeitswerkzeug 52 festgesetzt wurden und die erste Transporteinrichtung 10 verlassen haben.

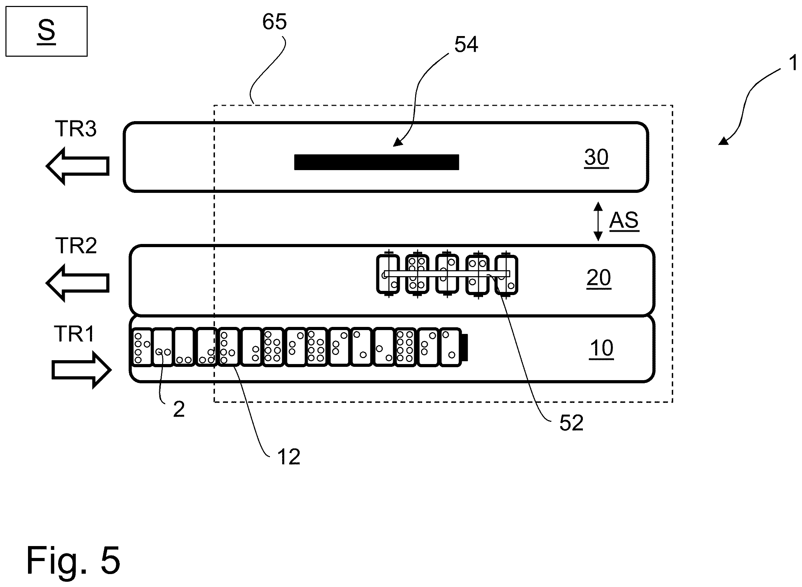

Auf den Verfahrensschritt nach Fig. 4 folgt der Verfahrensschritt nach Fig. 5. Wie es Fig. 5 zeigt, bildet der erste Industrieroboter über sein erstes Arbeitswerkzeug 52 zwischen unmittelbar benachbarten Getränkebehälterkisten 12, die bereits an die zweite Transporteinrichtung 20 überführt worden sind, eine jeweilige Lücke entlang der zweiten Transportrichtung TR2 aus. Hierdurch werden die Getränkebehälterkisten 12 derart ausgerichtet, dass sie sich an einer vorgegebenen Soll-Position befinden. Das zweite Arbeitswerkzeug 54 kann in diesen Positionen Getränkebehälter 2 aus den Getränkebehälterkisten entnehmen, da die Getränkebehälterkisten 12 sehr genau positioniert sind. Wie es vorhergehend bereits erwähnt wurde, können sich Maßabweichungen in der Geometrie der Getränkebehälterkisten 12 aufsummieren, wenn Getränkebehälterkisten 12 miteinander in Kontakt stehen bzw. wenn Getränkebehälterkisten 12 als Kontaktförderung auf der ersten Transporteinrichtung 10 bewegt und unter weiterhin ausgebildeter Kontaktierung von der ersten Transporteinrichtung 10 auf die zweite Transporteinrichtung 20 überführt werden. Mit dem nachfolgend beschriebenen Ausrichten der Getränkebehälterkisten 12 auf der zweiten Transporteinrichtung 20 können Maßabweichungen kompensiert werden.

Bei dem Ausbilden von Lücken ist die klemmende Verbindung zwischen den Klemmbacken 53 (vgl. Fig. 1) und den Getränkebehälterkisten 12 bereits aufgehoben. Unmittelbar vor dem Ausrichten stehen die Getränkebehälterkisten 12 somit frei auf der zweiten Transporteinrichtung 20 und besitzen keinen Kontakt zum ersten Arbeitswerkzeug 52. Hierauf folgend wird das erste Arbeitswerkzeug 52 entlang der zweiten Transportrichtung TR2 versetzt, wobei Anschläge 56 (vgl. Figuren 6 und 7), bei denen es sich um Zentrierfinger 58 handelt, mit Innenmantelflächen der Getränkebehälterkisten 12 in Kontakt gelangen und die Getränkebehälterkisten 12 entlang der zweiten Transportrichtung TR 2 schieben. Die Anschläge 56 bzw. die Zentrierfinger 58 befinden abstandsunveränderlich und ortsfest an einer Brücke 59 des ersten Arbeitswerkzeuges 52 und können daher Getränkebehälterkisten 12 in eine vorgegebene relative Beabstandung zueinander überführen, bei der Abweichungen in der Geometrie der Getränkebehälterkisten 12, die sich ggf. im Bereich der ersten Transporteinrichtung 10 aufsummiert haben, ausgeglichen werden können. Alternativ zu einer solchen Vorgehensweise kann auch vorgesehen sein, dass nach dem Lösen der klemmenden Verbindung zwischen den Klemmbacken 53 und den Getränkebehälterkisten 12 die zweite Transporteinrichtung 20 angetrieben wird, bis die Getränkebehälterkisten 12 mit den Anschlägen 56 in Kontakt gelangen und hierdurch zueinander ausgerichtet werden. Der Antrieb der zweiten Transporteinrichtung 20 wird hierbei über die Steuereinrichtung S veranlasst bzw. vorgegeben.

Die Figuren 6 und 7 verdeutlichen nochmals die einzelnen Schritte bei einem Ausrichten der Getränkebehälterkisten 12, mit welchem Ausrichten sich Abweichungen in der Geometrie ausgleichen lassen. Mehrere Getränkebehälterkisten 12 sind in Figuren 6 und 7 in Richtung der Bildebene hintereinander auf der zweiten Transporteinrichtung 20 angeordnet. Figuren 6 und 7 zeigen eine Schnittdarstellung. Der Schnitt verläuft hierbei durch eine Getränkebehälterkiste 12, so dass eine vordere Wand und eine hintere Wand der Getränkebehälterkiste 12 nicht zu erkennen sind.

Die Anschläge 56 bzw. Zentrierfinger 58 stehen abstandsunveränderlich mit der Brücke 59 in Verbindung. In Fig. 6 werden die Getränkebehälterkisten 12 noch von den Halteinstrumenten bzw. von den Klemmbacken 53 gegriffen. Die Klemmbacken 53 müssen die Getränkebehälterkisten 12 zunächst freigeben, damit der Vorgang des Ausrichtens der Getränkebehälterkisten 12 auf der zweiten Transporteinrichtung 20 beginnen kann. Eine Zusammenschau der Figuren 6 und 7 verdeutlicht hierbei, dass die Klemmbacken 53 zur Freigabe der Getränkebehälterkisten 12 in horizontaler Richtung auseinandergefahren werden und hierbei ihren Kontakt zu den Getränkebehälterkisten 12 verlieren. Ausgehend von der Darstellung nach Fig. 7 kann das erste Arbeitswerkzeug 52 dann entlang der zweiten Transportrichtung TR2, die in Richtung der Bildebene orientiert ist, versetzt werden. Jeweils zwei Anschläge 56 treten hierbei mit einer Innenmantelfläche einer jeweiligen vorderen Kastenwand der Getränkebehälterkisten 12 in Oberflächenkontakt und schieben die jeweilige Getränkebehälterkiste 12 kurzzeitig entlang der zweiten Transportrichtung TR2, wodurch die Getränkebehälterkisten 12, aus denen nachfolgend die Getränkebehälter 2 zu entnehmen sind, relativ zueinander ausgerichtet werden. Alternativ hierzu ist auch denkbar, dass das Arbeitswerkzeug 52 nach einem Öffnen der Klemmbacken 53 in seiner Position verbleibt, wobei die zweite Transporteinrichtung 20 kurzzeitig angetrieben wird, wodurch sämtliche Getränkebehälterkisten 12 einen Oberflächenkontakt zu jeweils zwei Anschlägen 56 ausbilden und wodurch die Getränkebehälterkisten 12 relativ zueinander ausgerichtet sind und nun eine jeweilige Soll-Position einnehmen.

Wie aus einer Zusammenschau der Figuren 4 und 5 zudem deutlich wird, werden Getränkebehälterkisten 12, die sich auf der ersten Transporteinrichtung 10 befinden, weiterhin entlang der ersten Transportrichtung TR1 gefördert, während das erste Arbeitswerkzeug 52 Lücken zwischen Getränkebehälterkisten 12 auf der zweiten Transporteinrichtung 20 ausbildet.

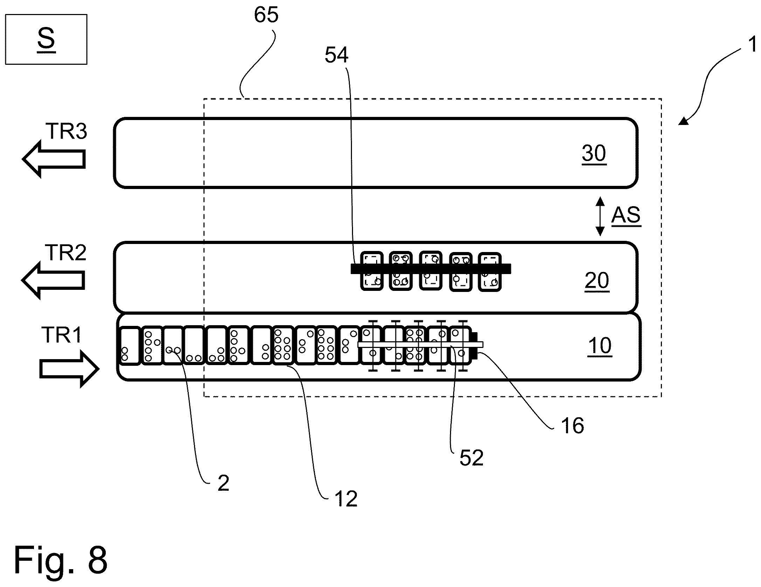

Die Fig. 8 verdeutlicht insbesondere die weitere Vorgehensweise bei einer Entnahme von Getränkebehältern 2 aus den Getränkebehälterkisten 12. Nachdem die Getränkebehälterkisten 12 über das erste Arbeitswerkzeug 52 in ihre jeweilige Soll-Positionen überführt und zueinander ausgerichtet worden sind, wird das erste Arbeitswerkzeug 52 von der zweiten Transporteinrichtung 20 zur ersten Transporteinrichtung 10 zurückbewegt, bis sich das erste Arbeitswerkzeug 52 erneut über Getränkebehälterkisten 12 befindet, welche an die zweite Transporteinrichtung 20 zu überführen sind. Während das erste Arbeitswerkzeug 52 zur ersten Transporteinrichtung 10 zurückbewegt wird, wird auch das zweite Arbeitswerkzeug 54, das als Bestandteil des zweiten Industrieroboters ausgebildet ist, bewegt und gelangt hierbei über die jeweiligen Getränkebehälterkisten 12, die sich auf der zweiten Transporteinrichtung 20 befinden. Da die zweite Transporteinrichtung 20 bei der dargestellten Ausführungsform zunächst nicht angetrieben wird, haben die Getränkebehälterkisten 12 in Fig. 8 ihre Soll-Positionen nach Fig. 5 noch nicht verlassen.

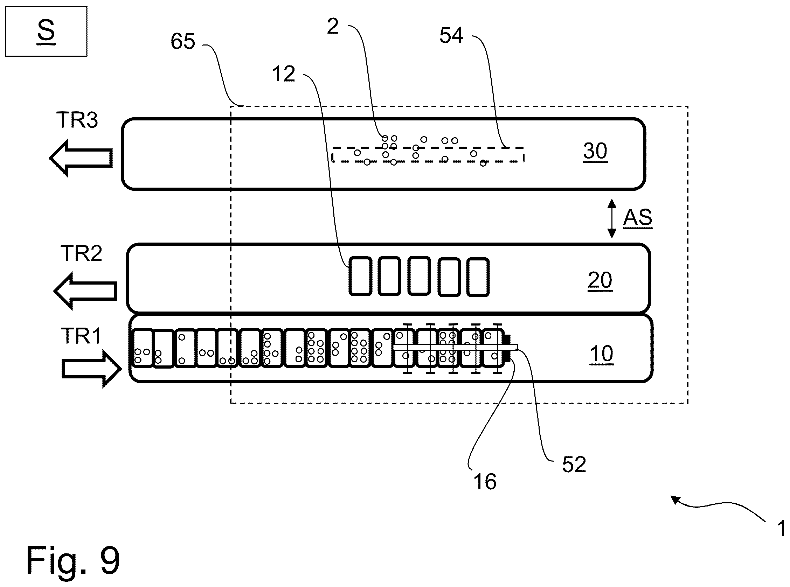

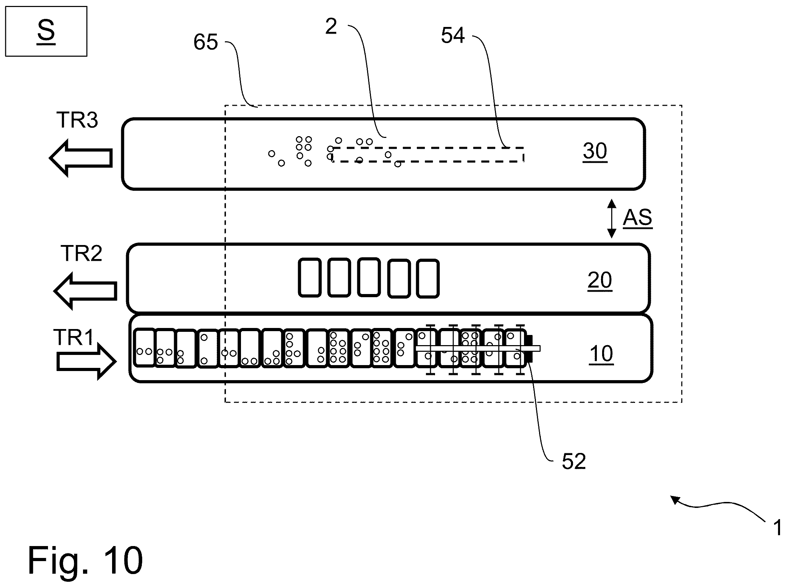

Die Fig. 9 zeigt einen weiteren Verfahrensschritt, welcher an den Schritt nach Fig. 8 anschließt. Das zweite Arbeitswerkzeug 54 hat die Getränkebehälter 2 aus den Getränkebehälterkisten 12 entnommen und an eine dritte Transporteinrichtung 30 überführt. Auf der zweiten Transporteinrichtung 20 befinden sich nun leere Getränkebehälterkisten 12. Nachdem die Getränkebehälter 2 auf der dritten Transporteinrichtung 30 abgesetzt worden sind oder bereits während einer Transferbewegung der Getränkebehälter 2 zu dritten Transporteinrichtung 30 wird die zweite Transporteinrichtung 20 über die Steuereinrichtung S betätigt und angetrieben. Hierdurch werden die leeren Getränkebehälterkisten 12 über die zweite Transporteinrichtung 20 entlang der zweiten Transportrichtung TR2 bewegt. Zeitgleich mit der Bewegung der leeren Getränkebehälterkisten 12 über die zweite Transporteinrichtung 20 wird auch die dritte Transporteinrichtung 30 über die Steuereinrichtung S betätigt, so dass die nun auf der dritten Transporteinrichtung 30 abgesetzten Getränkebehälter 2 über die dritte Transporteinrichtung 30 entlang der dritten Transportrichtung TR3 gefördert werden, welche dritte Transportrichtung TR3 parallel zur zweiten Transportrichtung TR2 verläuft. Der weitere Transport der leeren Getränkebehälterkisten 12 sowie der Getränkebehälter 2, die auf der dritten Transporteinrichtung 30 abgesetzt worden sind, wird aus einer Zusammenschau der Fig. 9 mit Fig. 10 deutlich. Wie es Figuren 1 bis 10 insgesamt zeigen, wird die erste Transporteinrichtung 10 kontinuierlich betrieben und fördert Getränkebehälterkisten 12 unterbrechungsfrei entlang der ersten Transportrichtung TR1. Durch das beschriebene Layout wird ein Auspacker bereitgestellt, der einen platzsparenden Aufbau besitzt und Vorteile bei der Wartung und bei der Reparatur besitzt. Zudem können Maßabweichungen bei Getränkebehälterkisten 12 durch das beschriebene Ausrichten ausgeglichen werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Auspacker
- 2: Getränkebehälter
- 10: Erste Transporteinrichtung
- 12: Getränkebehälterkiste
- 16: Anschlag
- 17: Mechanische Koppelung
- 20: Zweite Transporteinrichtung
- 30: Dritte Transporteinrichtung
- 52: Erstes Arbeitswerkzeug
- 53: Klemmbacke
- 54: Zweites Arbeitswerkzeug
- 56: Anschlag
- 58: Zentrierfinger
- 59: Brücke
- 60: Erster Weg
- 62: Führungsschiene
- 65: Einhausung
- 70: Zweiter Weg

- AS: Abstand
- TR1: Erste Transportrichtung
- TR2: Zweite Transportrichtung
- TR3: Dritte Transportrichtung

- S: Steuereinrichtung

## Patentansprüche

1. Arbeitswerkzeug (52) zum Manipulieren von Getränkebehälterkisten (12), umfassend
- mehrere Halteinstrumente, welche zum Festsetzen mehrerer Getränkebehälterkisten (12) am Arbeitswerkzeug (52) betätigbar sind, um durch eine Transferbewegung des Arbeitswerkzeuges (52) die hieran festgesetzten Getränkebehälterkisten (12) an einen Zielort zu verbringen sowie
- mehrere Anschläge (56), die zum Ausrichten mehrerer Getränkebehälterkisten (12) bei einer aufgehobenen Betätigung der mehreren Halteinstrumente ausgebildet sind.

2. Arbeitswerkzeug (52) nach Anspruch 1, bei dem die mehreren Anschläge (56) durch mehrere Zentrierfinger (58) ausgebildet sind.

3. Arbeitswerkzeug (52) nach Anspruch 1 oder Anspruch 2, bei dem die mehreren Anschläge (56) zum Ausrichten der mehreren Getränkebehälterkisten (12) abstandsveränderlich an einer Brücke (59) des Arbeitswerkzeuges (52) angeordnet sind.

4. Arbeitswerkzeug (52) nach Anspruch 1 oder Anspruch 2, bei dem die mehreren Anschläge (56) abstandsunveränderlich an einer Brücke (59) des Arbeitswerkzeuges (52) angeordnet sind.

5. Arbeitswerkzeug (52) nach einem der Ansprüche 1 bis 4, bei dem die mehreren Halteinstrumente durch mehrere Klemmbacken (53) ausgebildet sind, die zum Festsetzen der Getränkebehälterkisten (12) am Arbeitswerkzeug (52) paarweise zusammenwirken.

6. Industrieroboter zur Handhabung von Getränkebehälterkisten (12), umfassend ein Arbeitswerkzeug (52) gemäß einem der Ansprüche 1 bis 5.

7. Industrieroboter nach Anspruch 6, bei dem es sich um einen Portalroboter handelt.

8. Auspacker (1) für Getränkebehälter (2), umfassend
- eine erste Transporteinrichtung (10) für Getränkebehälterkisten (12) und eine zweite Transporteinrichtung (20) für Getränkebehälterkisten (12) sowie
- einen Industrieroboter nach Anspruch 6 oder Anspruch 7, wobei der Industrieroboter im Rahmen der Transferbewegung zum Überführen von Getränkebehälterkisten (12) von der ersten Transporteinrichtung (10) auf die zweite Transporteinrichtung (20) ausgebildet ist, und wobei
- der Industrieroboter oder ein weiterer Industrieroboter zur Entnahme von Getränkebehältern (2) aus den auf die zweite Transporteinrichtung (20) überführten Getränkebehälterkisten (12) ausgebildet ist.

9. Verfahren zum Manipulieren von Getränkebehälterkisten (12), umfassend folgende Schritte:
- Betätigen mehrerer Halteinstrumente eines Arbeitswerkzeuges (52), wodurch mehrere Getränkebehälterkisten (12) am Arbeitswerkzeug (52) festgesetzt werden, und Verbringen der Getränkebehälterkisten (12) an einen Zielort, wozu das Arbeitswerkzeug (52) mit den hieran festgesetzten Getränkebehälterkisten (12) eine Transferbewegung durchführt, und
- Ausrichten mehrerer Getränkebehälterkisten (12) über das Arbeitswerkzeug (52), wozu mehrere Getränkebehälterkisten (12) bei einer aufgehobenen Betätigung der mehreren Halteinstrumente mit Anschlägen (56) des Arbeitswerkzeuges (52) in Oberflächenkontakt gebracht werden.

10. Verfahren nach Anspruch 9, bei dem die mehreren Anschläge (56) abstandsunveränderlich mit einer Brücke (59) des Arbeitswerkzeuges (52) verbunden sind und wobei das Arbeitswerkzeug (52) am Zielort bei aufgehobener Betätigung der mehreren Halteinstrumente eine Versatzbewegung durchführt, wobei die Anschläge (56) des Arbeitswerkzeuges (52) während der Versatzbewegung mit den Getränkebehälterkisten (12) in Oberflächenkontakt gelangen und die Getränkebehälterkisten (12) ausrichten.

11. Verfahren nach Anspruch 9 oder Anspruch 10, bei dem
- die Getränkebehälterkisten (12) über eine erste Transporteinrichtung (10) bewegt werden und über die mehreren Halteinstrumente am Arbeitswerkzeug (52) festgesetzt werden, während sich die Getränkebehälterkisten (12) auf der ersten Transporteinrichtung (10) befinden, und wobei
- die am Arbeitswerkzeug (52) festgesetzten Getränkebehälterkisten (12) mit der Transferbewegung auf eine zweite Transporteinrichtung (20) überführt werden und wobei
- das Ausrichten der Getränkebehälterkisten (12) auf der zweiten Transporteinrichtung (20) erfolgt, wozu die Getränkebehälterkisten (12) mit Anschlägen (56) des Arbeitswerkzeuges (52) in Oberflächenkontakt gebracht werden.

12. Verfahren nach Anspruch 11, bei dem die Anschläge (56) abstandsunveränderlich mit einer Brücke (59) des Arbeitswerkzeuges (52) verbunden sind und wobei die Getränkebehälterkisten (12) mit den Anschlägen (56) in Oberflächenkontakt gebracht werden, indem das Arbeitswerkzeug (52) in einer vorgegebenen Position verweilt und die Getränkebehälterkisten (12) durch eine Bewegung über die zweite Transporteinrichtung (20) auf die Anschläge (56) auffahren.

13. Verfahren nach einem der Ansprüche 9 bis 12, wobei die Getränkebehälterkisten (12) zum Ausrichten bei einer aufgehobenen Betätigung der mehreren Halteinstrumente über ihre jeweilige Innenmantelfläche mit Anschlägen (56) des Arbeitswerkzeuges (52) in Oberflächenkontakt gebracht werden.

14. Verfahren nach einem der Ansprüche 11 bis 13, bei dem die Getränkebehälterkisten (12) zum Ausrichten bei einer aufgehobenen Betätigung der mehreren Halteinstrumente über einen bestimmten Bereich ihrer jeweiligen Innenmantelfläche mit Anschlägen (56) des Arbeitswerkzeuges (52) in Oberflächenkontakt gebracht werden, welcher jeweilige bestimmte Bereich über eine jeweilige Wand einer jeweiligen Getränkebehälterkiste (12) ausgebildet wird, welche jeweilige Wand sich entlang einer zweiten Transportrichtung (TR2) der zweiten Transporteinrichtung (20) zuvorderst befindet.

15. Verfahren nach einem der Ansprüche 9 bis 14, bei dem es sich bei dem Arbeitswerkzeug (52) um ein Arbeitswerkzeug (52) eines Portalroboters handelt.
